# EUROPEAN PATENT APPLICATION

(11) **EP 2 824 332 A1**
(43) Date of publication of application: **14.01.2015**
(21) Application number: 13175538.1
(22) Date of filing: 08.07.2013
(51) Int. Cl.: F04D 29/52, F04D 29/58, F04D 25/08, F04D 25/16

(54) **Axial flow duct fan with motor cooled by air tapped outside the duct**

(71) Applicant: ABB Technology AG, 8050 Zürich (CH)
(72) Inventor: Vartiainen, Ari, 00380 Helsinki (FI); Kanninen, Pekka, 00380 Helsinki (FI)
(74) Representative: Kolster Oy Ab

(57) **Abstract**

The arrangement comprises a duct (10) with an axial direction (X-X). An electric motor (20) is positioned within the duct (10) and enclosed by a casing (28). The electric motor (20) comprises a shaft (21) having a first end (21A) protruding from a first end (28A) of the casing (28). A first fan (30) is connected to the first end (21A) of a shaft (21). A housing (50) encloses the casing (28) so that the first fan (30) remains outside the housing (50). A ventilation channel (55) is formed between the casing (28) and the housing (50). At least one cooling air inlet duct (61, 62) is situated at a second end (52) of the housing (50) and extends from the exterior of the duct (10) to the interior of the housing (50). At least one cooling air outlet opening (70, 71A, 72A) is situated at a first end (51) of the housing (50) facing towards the first fan (30).

## Description

### FIELD OF THE INVENTION

The present invention relates to a cooling arrangement for an axial fan according to the preamble of claims 1 and 7.

Axial fans are used in ventilation ducts for passing air through the ventilation duct from one point to another point. The electric driving motor of an axial fan is positioned within the ventilation duct.

### BACKGROUND ART

A radial fan is often used in applications where the air passing in the ventilation duct is hot. The fan is positioned within the ventilation duct and the electric motor driving the fan is positioned outside the ventilation duct. The shaft of the electric motor passes through the side surface of the ventilation duct and the fan is mounted on the shaft within the ventilation duct. The electric motor is thus situated in the outside air, which means that the electric motor can be cooled directly by the outside air. The hot air passing in the ventilation duct will not heat the electric motor. A standard electric motor can thus be used as the driving motor in a radial fan. A standard electric motor is designed for a maximum environmental temperature of 40 degrees Celsius.

There are, however, many applications where it is not possible to use a radial fan. One reason might e.g. be lack of space for the motor outside the ventilation duct. Radial fans are also avoided due to the fact that they are more expensive than axial fans.

One solution is to use an over dimensioned electric motor in the axial fan. Only a portion of the power of the over dimensioned electric motor would be needed to drive the axial fan. The electric motor would thus produce less waste heat compared to the situation where the electric motor is working at nominal load. This would help to keep the temperature of the electric motor below an acceptable level.

Another problem in an axial fan where the shaft of the electric motor is in the vertical direction is related to the wear of the bearings. The bearings are in electric motors with vertical shafts subject to more wear compared to the situation where the shaft is in the horizontal direction. It is thus especially important that an electric motor having the shaft in the vertical direction is provided with a proper cooling keeping the operation temperature of the electric motor at an acceptable level.

Another solution is to use a special electric motor in the axial fan. The special electric motor has been dimensioned so that it can operate at a higher temperature. Such an electric motor uses special isolation materials and special lubrication materials for the bearings in order to be able to withstand higher temperatures. Such a special electric motor becomes much more expensive compared to a standard electric motor. Such special electric motors could be dimensioned to operate at an evironmental temperature of about 70 or 80 degrees Celsius.

There is thus a need to be able to use a standard electric motor in an axial fan positioned within a ventilation duct conducting hot air from an apparatus producing waste heat.

### BRIEF DESCRIPTION OF THE INVENTION

An object of the present invention is to achieve an improved cooling arrangement for an axial fan.

The cooling arrangement for an axial fan according to the invention is characterized by what is stated in the characterizing portion of claims 1 and 7.

The cooling arrangement for an axial fan comprises:
a cylindrical duct having an axial direction and comprising a first end, an opposite second end and a circumference extending in the axial direction between the first end and the second end of the duct,
an electric motor within the duct comprising a rotatable shaft extending in the axial direction of the duct and having a first end and an opposite second end, a rotor on the shaft, and a stator surrounding the rotor,
a casing within the duct enclosing the stator of the electric motor, said casing comprising a first end facing towards the first end of the duct, an opposite second end, and a circumference extending in the axial direction between the first end and the second end of the casing,
at least one first fan within the duct connected to the first end of the shaft protruding from the first end of the casing, said at least one first fan causing air to flow in the duct in a direction from the second end towards the first end of the duct.

The arrangement in a first embodiment according to claim 1 is **characterized in that** it comprises further:
a housing within the duct comprising a first end facing towards the first end of the duct, an opposite second end, and a circumference extending in the axial direction between the first end and the second end of the housing, whereby at least the second end and the circumference of the casing is enclosed by the housing so that a ventilation channel is formed in the space between the circumference of the casing and the circumference of the housing, the at least one first fan remaining outside the housing, the casing being supported at the housing,
at least one cooling air inlet duct at the second end of the housing extending from the exterior of the circumference of the duct to the interior of the housing,
at least one cooling air outlet opening at the first end of the housing.

The arrangement in a second embodiment according to claim 7 is **characterized in that** it comprises further:
a housing within the duct comprising a first end facing towards the first end of the duct, an opposite second end, and a circumference extending in the axial direction between the first end and the second end of the housing, whereby the casing is completely enclosed by the housing so that a ventilation channel is formed in the space between the circumference of the casing and the circumference of the housing, the at least one first fan remaining outside the housing, the casing being supported at the housing,
at least one cooling air inlet duct situated at one end of the housing and extending from the exterior of the circumference of the duct to the interior of the housing,
at least one cooling air outlet duct situated at an opposite end of the housing in relation to the at least one cooling air inlet duct,
a second fan arranged within the housing at a second opposite end of the shaft protruding from the second end of the casing in the space between the second end of the casing and the second end of the housing, whereby the second fan is arranged to cause cooling air to flow from the at least one cooling air inlet duct to the interior of the housing and further along the ventilation channel to the at least one cooling air outlet duct and further to the exterior of the duct.

A standard electric motor can thus be used in the axial fan in the arrangement according to the invention. The environmental temperature of the electric motor can be maintained at a maximum of 40 degrees Celsius due to the cooling of the electric motor with external cooling air.

The arrangement according to the invention can be used e.g. in connection with diesel power plants. There is a need to remove the waste heat produced by the generator driven by the diesel engine. Diesel power plants are built as compact as possible and there might not be excess room for fan motors outside the air ducts. The electric motor driving the fan must thus be positioned within the ventilation air duct. It is advantageous to position the fan directly on the shaft of the electric motor without the use of a transmission. If the motor would be positioned outside the air duct the fan inside the duct could be driven e.g. through a belt. Such a solution would easily cause vibration problems to fastening arrangement of the electric motor.

The temperature of the waste heat to be removed from the generator could be in the range of 80 to 100 degrees Celsius. The amount of hot air to be removed from a generator in a diesel power plant could be in the order of 10 cubic meters per second. The power of the electric motor driving the fan in the axial fan could be in the order of 10 kW. This would mean that the production of waste heat from the electric motor driving the fan would be in the order of 1 kW. This means that the cooling air should transport a heat power of about 1 kW away from the electric motor. The diameter of the duct could be in the range of 0.5 to 1.5 meters.

The total cross section area of the at least one cooling air inlet duct should be in the same order as the free cross section area of the duct at the housing. The whole cooling air circuit should naturally have approximately the same cross section area.

### BRIEF DESCRIPTION OF THE DRAWINGS

In the following the invention will be described in greater detail by means of preferred embodiments with reference to the attached drawings, in which:
Figure 1 is a vertical cross section of a first embodiment of a cooling arrangement for an axial fan according to the invention.
Figure 2 is a vertical cross section of the electric motor in the axial fan.
Figure 3 is a vertical cross section of a second embodiment of a cooling arrangement for an axial fan according to the invention.
Figure 4 is a vertical cross section of a cooling arrangement for an axial fan used to remove hot air produced by an electric machine.

### DETAILED DESCRIPTION OF THE INVENTION

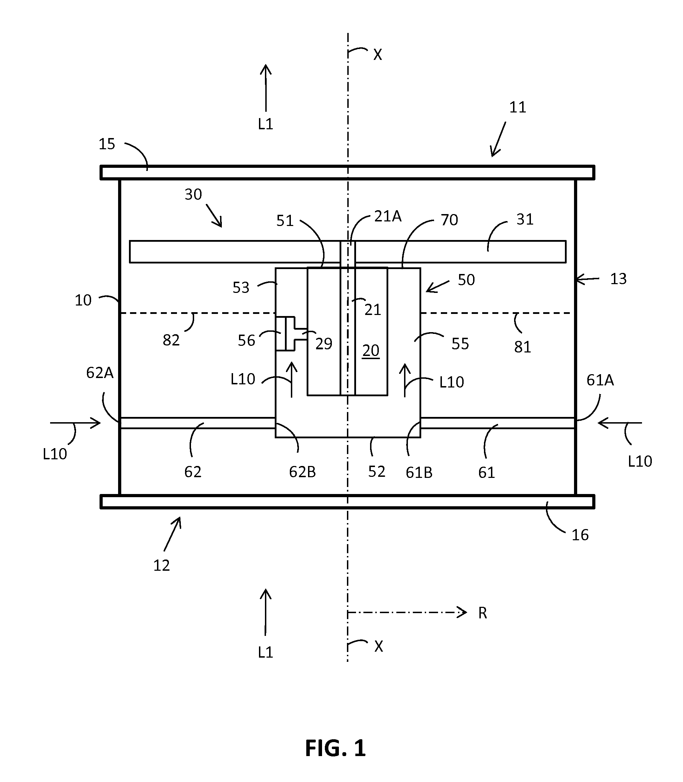

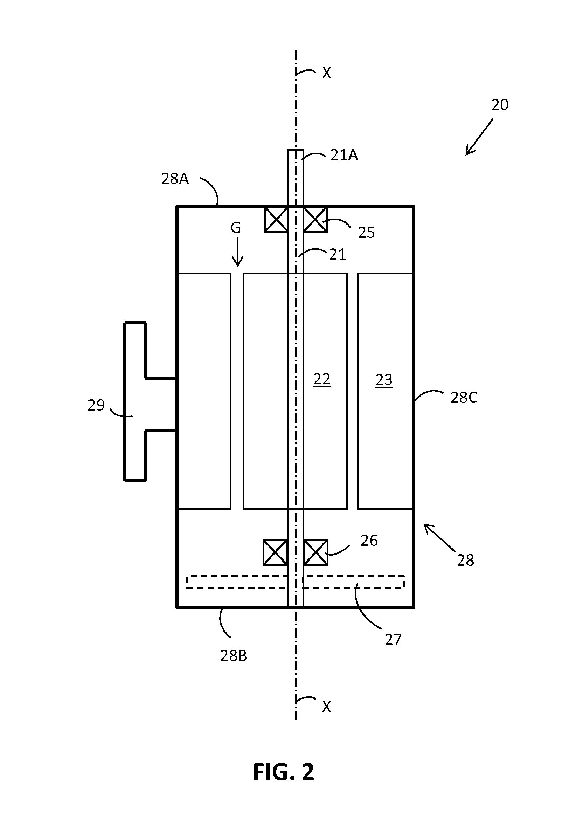

Figure 1 is a vertical cross section of a first embodiment of a cooling arrangement for an axial fan according to the invention. Figure 2 is a vertical cross section of the electric motor in the axial fan.

The cooling arrangement comprises a duct 10, an electric motor 20, a first fan 30, and a housing 50.

The duct 10 has a cylindrical form with an axial direction X-X and a direction R perpendicular to the axial direction X-X. The duct 10 comprises a first end 11, an opposite second end 12, and a circumference surface 13 extending in the axial direction X-X between the first end 11 and the second 12 of the duct 10. The duct 10 is provided with a flange 15, 16 at each axial X-X end 11, 12 making it possible to connect the duct 10 to other ducts or ventilation equipment.

The electric motor 20 comprises a shaft 21 having a first end 21A and a second opposite end 21B. The shaft 21 has further a centre axis X-X extending in the axial direction of the duct 10. The shaft 21 is rotatably supported with bearings 25, 26 at both ends. A rotor 22 is provided on the centre portion of the shaft 21. The rotor 22 is attached to the shaft 21 and rotates with the shaft 21. A stator 23 surrounds the rotor 22. There is a gap G between the rotor 22 and the stator 23. The electric motor 20 comprises further a casing 28 enclosing the parts of the electric motor 20. The casing 28 has a cylindrical form and comprises a first end 28A, a second opposite end 28B and a circumference 28C extending in the axial direction X-X between the first end 28A and the second end 28B of the casing 28. The electric motor 20 can further be provided with an internal fan 27 blowing cooling air through the electric motor 20. This means that the electric motor 20 is provided with air passages at both axial X-X ends 28A, 28B in order for the cooling air to be able to pass through the electric motor 20. The internal fan 27 is, however, not necessary needed in the inventive arrangement. The internal fan 27 can thus be left out and the electric motor 20 can be closed at both axial X-X ends 28A, 28B. The electric motor 20 may further comprise a stand 29 for attaching the electric motor 20 to an external support structure.

The first fan 30 is connected to a first end 21A of the shaft 21 of the electric motor 20. The first end of the shaft 21 of the electric motor 20 protrudes from the first end 28A of the casing 28 of the electric motor 20. The first fan 30 comprises blades 31 having a form such that rotation of the first fan 30 with the electric motor 20 causes air L1 to flow in the duct 10. The first fan 30 forms thus a propeller. The blades 31 of the first fan 30 blow air L1 in a direction from the second end 12 of the duct 10 towards the first end 11 of the duct 10. The first end 11 of the duct 10 is thus a downstream end and the second end 12 of the duct 10 is an upstream end.

The housing 50 surrounds at least the second end 28B and the circumference 28C of the casing 28 of the electric motor 20. The electric motor 20, the first fan 30 and the housing 50 are all situated within the duct 10. The housing 50 has a first end 51, a second end 52 and a circumference 53 extending in the axial direction X-X from the first end 51 to the second end 52 of the housing 50. The second end 52 and the circumference 53 of the housing 50 form a closed surface. The second end 52 of the housing 50 is at least partly open. The first end 51 of the housing 50 is facing towards the first end 11 of the duct 10. The second end 52 of the housing 50 is facing towards the second end 12 of the duct 10. The second end 52 of the housing 50 is thus a downstream end and the first end 51 of the housing 50 is an upstream end. The first end 51 of the housing 50 is positioned essentially on the same radial plane as the first end 28A of the casing 28 of the electric motor 20. There is a cooling air outlet opening 70 at the first end 51 of the housing 50. The cooling air outlet opening 70 is formed between the circumference 28C of the casing 28 of the electric motor 20 and the circumference 53 of the housing 50 at the first end 51 of the housing 50. A ventilation channel 55 is formed between the circumference 28C of the casing 28 of the electric motor 20 and the circumference 53 of the housing 50 between the first end 51 and the second end 52 of the housing 50. The suction caused by the first fan 30 within the ventilation channel 55 is most effective when the first end 51 of the housing 50 is approximately on the same axial X-X position as the first end 28A of the casing 28. The cooling air outlet opening 70 should advantageously be formed in a radial plane.

The arrangement comprises further two cooling air inlet ducts 61, 62 passing radially from the exterior of the circumference 13 of the duct 10 to the interior of the housing 50. The cooling air inlet ducts 61, 62 have an inlet opening 61A, 62A at the exterior of the duct 10 and an outlet opening 61B, 62B at the interior of the housing 50. The cooling air inlet ducts 61, 62 are positioned at the second upstream end 52 of the housing 50.

The first fan 30 can be used to ventilate hot air L1 from an apparatus producing waste heat though the duct 10 and further through ventilation ducts connected to the duct 10 out of the space where the apparatus producing waste heat is situated. The hot air L1 passes in the duct 10 along the outer surfaces of the housing 50 i.e. along the second end 52 and along the circumference 53 of the housing 50. The hot air L1 does not come into contact with the casing 28 of the electric motor 10 at all and will thus not heat the electric motor 20.

The first fan 30 is further arranged to cause an underpressure at the cooling air outlet opening 70 at the first end 51 of the housing 50. The underpressure at the cooling air outlet opening 70 causes cooling air L10 to flow from the exterior of the duct 10 through the cooling air ducts 61, 62 to the interior of the housing 50 at the second end 52 of the housing 50 and further along the ventilation channel 55 within the housing 50 to the cooling air outlet opening 70 at the first end 51 of the housing 50. Cooling air L10 is thus sucked from the inlet openings 61A, 62A positioned at the exterior of the circumference 13 of the ventilation duct 10 into the cooling air inlet ducts 61, 62 and further from the outlet openings 61B, 62B to the interior of the housing 50. The cooling air L10 passing out from the cooling air outlet opening 70 will be mixed with the hot air flow L1 and pass further with the hot air flow L1 along the duct 10 out of the space where the apparatus producing heat is situated. The electric motor 20 will thus be cooled with the cooling air L10 passing along the ventilation channel 55 in the housing 50 along the outer surface of the casing 28 of the electric motor 20. The cooling air L10 is thus taken from the outside of the duct 10 from the space surrounding the duct 10. The cooling air L10 can be taken directly from the space surrounding the duct 10 or cooling air L10 can be directed e.g. with ducts from a more remote space to the space surrounding the duct 10.

This first embodiment comprises two cooling air ducts 61, 62 leading from the exterior of the duct 10 into the interior of the housing 50. The invention is naturally not limited to the use of two cooling air ducts 61, 62. At least one cooling air inlet duct 61, 62 is needed in the invention. The number of cooling air inlet ducts 61, 62 to be used depends e.g. on whether the cooling air inlet ducts 61, 62 also are used to support the housing 50 within the duct 10.

The housing 50 might in this first embodiment be supported at the duct 10 only through a suitable number of cooling air inlet ducts 61, 62. The cooling air inlet ducts 61, 62 would thus have a double function. At least three cooling air inlet ducts 61, 62 would in such case be needed. The housing 50 could on the other hand be supported by separate support vanes 81, 82 extending between the outer surface of the housing 50 and the inner surface of the duct 10. Then only one cooling air inlet duct 61, 62 could be used.

The electric motor 20 must naturally be supported at the housing 50. The electric motor 20 can be fastened with bolts e.g. through the normal stand 29 of the electric motor 20 to a support structure 56 within the housing 50. The electric motor 20 could also be supported with radial support vanes (not shown in the figures) extending between the outer surface of the casing 28 of the electric motor 20 and the inner surface of the housing 50.

There is one electric motor 20, one shaft 21 and one first fan 30 in the embodiment in figure 1. The first fan 30 has a double function in this embodiment. The first fan 30 causes hot air L1 to flow in the duct 10 from the second end 12 towards the first end 11 of the duct 10. The first fan causes additionally cooling air L10 to flow from the cooling inlet ducts 61, 62 along the ventilation channel 55 and further out of the ventilation channel 55 through the cooling air L10 outlet opening 70.

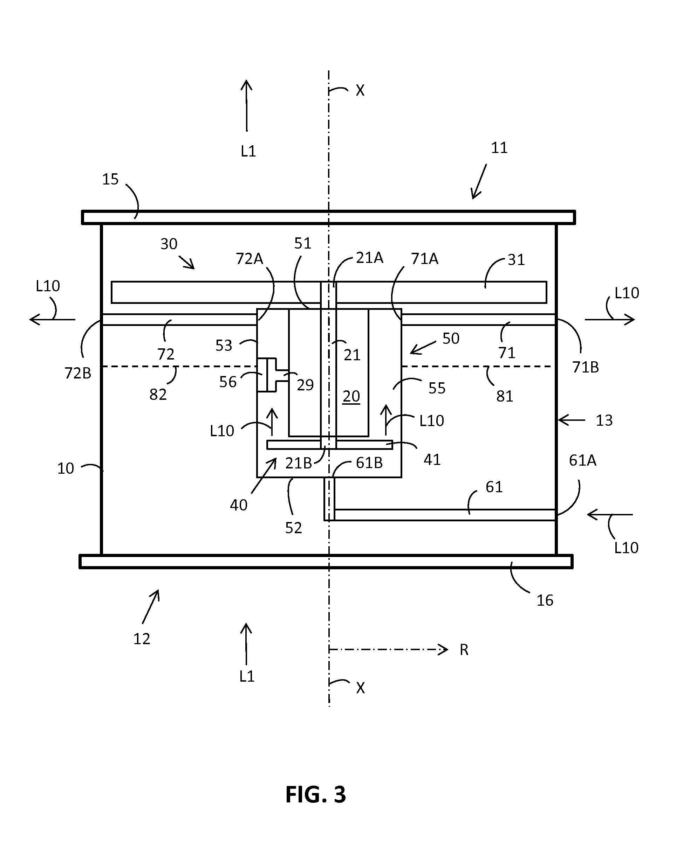

Figure 3 is a vertical cross section of a second embodiment of a cooling arrangement for an axial fan according to the invention.

This second embodiment comprises in addition to the first fan 30 a second fan 40 connected to a second opposite end 21B of the shaft 21 of the electric motor 20 at an opposite end of the electric motor 20. This embodiment comprises only one cooling air inlet duct 61. The second fan 40 comprises blades 41 having a form such that rotation of the second auxiliary fan 40 produces air to flow through the interior of the housing 50 surrounding the casing 28 of the electric motor 20. The housing 50 has a first end 51, a second end 52 and a circumference 53 extending in the axial direction X-X from the first end 51 to the second end 52 of the housing 50. The first end 51, the second end 52 and the circumference 53 of the housing 50 form closed surfaces. The housing 50 encloses the casing 28 of the electric motor 20 completely so that hot air L1 flowing in the duct 10 cannot penetrate into the housing 50 at all. The second fan 40 is situated within the housing 50 between the second end 52 of the housing 50 and the second end 28B of the casing 28 of the electric motor 20.

The single cooling air inlet duct 61 passes radially from the exterior of the circumference 13 of the ventilation duct 10 to the centre of the ventilation duct 10 and further axially to the second end 52 of the housing 50. The cooling air inlet duct 61 has an inlet opening 61A at the exterior of the duct 10 and an outlet opening 61B at the interior of the housing 50. The outlet opening 61B is positioned in the middle of the second end 52 of the housing 50.

The arrangement comprises further two cooling air outlet ducts 71, 72 passing radially R from the interior of the housing 50 to the exterior of the duct 10. The cooling air outlet inlet ducts 71, 72 have an inlet opening 71A, 72A at the circumference surface 53 of the housing 50 and an outlet opening 71B, 72B at the exterior of the duct 10. The cooling air outlet ducts 71, 72 are positioned at the first end 51 of the housing 50.

The first fan 30 ventilates hot air L1 from an apparatus producing waste heat though the duct 10 and further through other ducts connected to the duct 10 to a space outside the space where the apparatus producing waste heat is situated. The hot air L1 passes in the duct 10 from the second end 12 of the duct 10 towards the first end 11 of the duct 10 along the outer surfaces of the housing 50 i.e. along the second end 52 and the circumference surface 53 of the housing 50.

The second fan 40 is arranged to cause cooling air L10 to pass into the cooling air inlet duct 61 from the inlet opening 61A of the cooling air inlet duct 61 and further from the outlet opening 61B to the interior of the housing 50. The cooling air L10 will then flow through the ventilation channel 55 from the second end 52 of the housing 50 to the first end 51 of the housing 50. The cooling air L10 flows further from the first end 51 of the housing 50 to the inlet openings 71A, 72A of the cooling air outlet ducts 71, 72. The cooling air L10 passes further along the cooling air outlet ducts 71, 72 and further from the outlet openings 71B, 72B of the cooling air outlet ducts 71, 72 to the exterior of the duct 10.

The housing 50 might in this second embodiment be supported at the duct 10 only through a suitable number of cooling air outlet ducts 71, 72. The cooling air outlet ducts 71, 72 would thus have a double function. At least three cooling air outlet ducts 71, 72 would in such case be needed. The cooling air inlet duct 61 could also form an additional support for the housing 50. The housing 50 could on the other hand be supported by separate support vanes 81, 82 extending between the circumference surface 53 of the housing 50 and the circumference surface 13 of the duct 10.

The second fan 40 could in this second embodiment alternatively be arranged to cause cooling air L10 to flow in the opposite direction i.e. from the cooling outlets ducts 71, 72 to the cooling inlet duct 61. This is due to the fact that the housing 50 encloses the casing 28 of the electric motor 20 totally and that a separate second fan 40 is used to transfer the cooling air L10.

There is one electric motor 20, one shaft 21, a first fan 30 and a second fan 40 in the embodiment in figure 3. The first fan 30 causes hot air L1 to flow in the duct 10 from the second end 12 towards the first end 11 of the duct 10. The second fan 40 causes cooling air L10 to flow from the cooling inlet duct 61 along the ventilation channel 55 and further out of the ventilation channel 55 through the cooling air L10 outlet duct 71, 72. Two different air flows L1, L10 are produced with two fans 30, 40 positioned on one single shaft 21 of the electric motor 20.

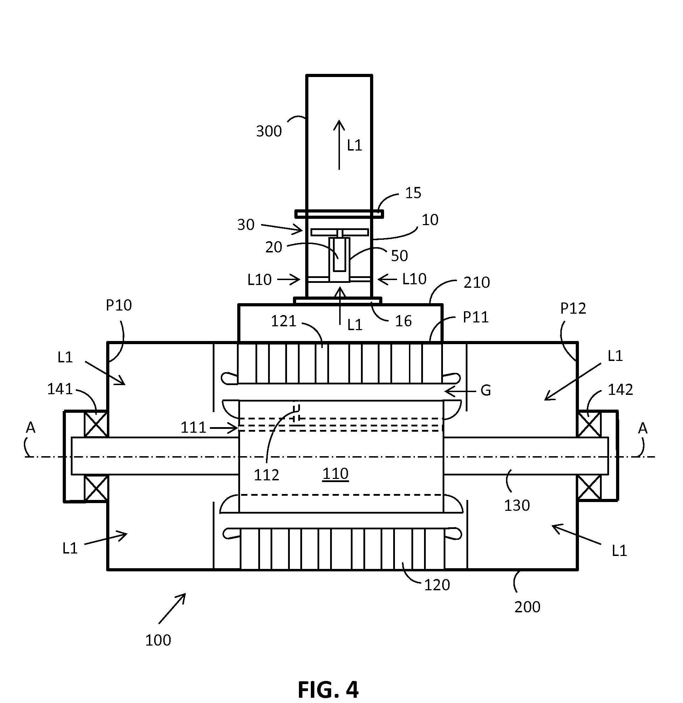

Figure 4 is a vertical cross section of a cooling arrangement for an axial fan used to remove hot air produced by an electric machine.

An electric machine 100 is provided within a housing 200 forming a closed space around the electric machine 100. The electric machine 100 comprises a rotor 110 fitted on a rotatable shaft 130. The shaft 130 is supported at both ends on bearings 141, 142. The shaft 130 has a centre axis A-A. The electric machine 100 comprises further a stator 120 surrounding the rotor 110. The electric machine 100 can be a generator or a motor. The rotor 110 is provided with axial A-A air channels 111 and radial air channels 112. The axial air channels 111 open into the radial air channels 112. The stator 120 is provided with radial air channels 121.

Both end surfaces of the housing 200 are provided with air passages P11, P12 allowing cooling air L1 to pass from the exterior of the housing 200 into the housing 200 towards both ends of the electric machine 100. The cooling air L1 can further be directed from both ends of the rotor 110 into the axial air channels 111 and further from the axial air channels 111 to the radial air channels 112. The air will then pass from the radial air channels 112 of the rotor 110 through the gap G between the rotor 110 and the stator 120 to the radial air channels 121 in the stator 120.

The air L1 that has been heated when passing through the rotor 110 and the stator 120 in the electric machine 100 passes further from the radial air channels 121 in the stator 120 through air passages P11 in the ceiling of the housing 200 to a plenum 210 in the upper part of the housing 200 above the stator 120 of the electric machine 100 and further to the duct 10, which is connected through the second flange 12 to the plenum 210. The hot air L1 will then be ventilated with the axial fan 30 through the duct 10 and further through an external duct 300, which is connected to the duct 10 through the first flange 11. The external duct 300 can be directed to a space outside the space where the electric machine 100 is or to the outside air.

The cross section of the cylindrical duct 10 is advantageously circular. The form of the casing 50 is advantageously essentially cylindrical in a case where the electric motor 20 is essentially cylindrical. The cross section of the cooling air inlet ducts 61, 62 and the cooling air outlet ducts 71, 72 is advantageously essentially circular. The cooling air outlet passage 70 in the casing 50 forms advantageously a circular ring around the electric motor 20.

The duct 10 is in the figures presented to run in the vertical direction. The duct 10 could, however, also run in the horizontal direction or in an inclined direction. The axis X-X of the electric motor 20 runs in all cases in the axial X-X direction of the duct 10.

The electric machine 100 is advantageously a generator in a diesel power station.

The invention and its embodiments are not limited to the examples described above but may vary within the scope of the claims.

## Claims

1. Cooling arrangement for an axial fan comprising:
a duct (10) having an axial direction (X-X) and comprising a first end (11), an opposite second end (12) and a circumference (13) extending in the axial direction (X-X) between the first end (11) and the second end (12) of the duct (10),
an electric motor (20) within the duct (10) comprising a rotatable shaft (21) extending in the axial direction (X-X) of the duct (10) and having a first end (21A) and an opposite second end (21B), a rotor (22) on the shaft (21), and a stator (23) surrounding the rotor (22),
a casing (28) within the duct (10) enclosing the stator (23) of the electric motor (20), said casing (28) comprising a first end (28A) facing towards the first end (11) of the duct (10), an opposite second end (28B), and a circumference (28C) extending in the axial direction (X-X) between the first end (28A) and the second end (28B) of the casing (28),
at least one first fan (30) within the duct (10) connected to the first end (21A) of the shaft (21) protruding from the first end (28A) of the casing (28), said at least one first fan (30) causing air (L1) to flow in the duct (10) in a direction from the second end (12) towards the first end (11) of the duct (10),
**characterized in that** the arrangement comprises further:
a housing (50) within the duct (10) comprising a first end (51) facing towards the first end (11) of the duct (10), an opposite second end (52), and a circumference (53) extending in the axial direction (X-X) between the first end (51) and the second end (52) of the housing (50), whereby at least the second end (28B) and the circumference (28C) of the casing (28) is enclosed by the housing (50) so that a ventilation channel (55) is formed in the space between the circumference (28C) of the casing (28) and the circumference (53) of the housing (50), the at least one first fan (30) remaining outside the housing (50), the casing (28) being supported (29, 56) at the housing (50),
at least one cooling air inlet duct (61, 62) at the second end (52) of the housing (50) extending from the exterior of the circumference (13) of the duct (10) to the interior of the housing (50),
at least one cooling air outlet opening (70, 71A, 72A) at the first end (51) of the housing (50).

2. Cooling arrangement according to claim 1, **characterized in that**:
the first end (51) of the housing (50) is positioned at the same axial (X-X) position as the first end (28A) of the casing (28),
the at least one cooling air outlet opening (70) is formed at the first end (51) of the housing (50) in the space between the circumference (28C) of the casing (28) and the circumference (53) of the housing (50), whereby
the at least one first fan (30) is arranged to produce underpressure in the at least one cooling air outlet opening (70) so that cooling air (L10) flows from the at least one cooling air inlet duct (61, 62) to the interior of the housing (50) at the second end (52) of the housing (50) and further along the ventilation channel (55) to the at least one cooling air outlet opening (70) and further out from the cooling air outlet opening (70) to the interior of the ventilation duct (10).

3. Cooling arrangement according to claim 1, **characterized in that**:
the casing (28) is completely enclosed by the housing (50),
the at least one cooling air outlet opening (71A, 71B) is connected to at least one cooling air outlet duct (71, 72) passing from the interior of the housing (50) across the interior of the duct (10) and through the circumference (13) of the duct (10) to the exterior of the duct (10),
a second fan (40) is arranged within the housing (50) at a second opposite end (21B) of the shaft (21) protruding from the second end (28B) of the casing (28) in the space between the second end (28b) of the casing (28) and the second end (52) of the housing (50), whereby the second fan (40) is arranged to cause cooling air (L10) to flow from the at least one cooling air inlet duct (61, 62) to the interior of the housing (50) and further along the ventilation channel (55) to the at least one cooling air outlet opening (71A, 71B) and further along the at least one cooling air outlet duct (71, 72) to the exterior of the duct (10).

4. Cooling arrangement according to any one of claims 1 to 3, **characterized in that** the form of the casing (28) of the electric motor (20) is essentially cylindrical.

5. Cooling arrangement according to any one of claims 1 to 4, **characterized in that** the form of the housing (50) is essentially cylindrical.

6. Cooling arrangement according to any one of claims 1 to 5, **characterized in that** the duct (10) comprises fastening flanges (15, 16) at both ends (11, 12) of the duct (10).

7. Cooling arrangement for an axial fan comprising:
a duct (10) having an axial direction (X-X) and comprising a first end (11), an opposite second end (12) and a circumference (13) extending in the axial direction (X-X) between the first end (11) and the second end (12) of the duct (10),
an electric motor (20) within the duct (10) comprising a rotatable shaft (21) extending in the axial direction (X-X) of the duct (10) and having a first end (21A) and an opposite second end (21B), a rotor (22) on the shaft (21), and a stator (23) surrounding the rotor (22),
a casing (28) within the duct (10) enclosing the stator (23) of the electric motor (20), said casing (28) comprising a first end (28A) facing towards the first end (11) of the duct (10), an opposite second end (28B), and a circumference (28C) extending in the axial direction (X-X) between the first end (28A) and the second end (28B) of the casing (28),
at least one first fan (30) within the duct (10) connected to the first end (21A) of the shaft (21) protruding from the first end (28A) of the casing (28), said at least one first fan (30) causing air (L1) to flow in the duct (10) in a direction from the second end (12) towards the first end (11) of the duct (10),
**characterized in that** the arrangement comprises further:
a housing (50) within the duct (10) comprising a first end (51) facing towards the first end (11) of the duct (10), an opposite second end (52), and a circumference (53) extending in the axial direction (X-X) between the first end (51) and the second end (52) of the housing (50), whereby the casing (28) is completely enclosed by the housing (50) so that a ventilation channel (55) is formed in the space between the circumference (28C) of the casing (28) and the circumference (53) of the housing (50), the at least one first fan (30) remaining outside the housing (50), the casing (28) being supported (29, 56) at the housing (50),
at least one cooling air inlet duct (61, 62) situated at one end (51, 52) of the housing (50) and extending from the exterior of the circumference (13) of the duct (10) to the interior of the housing (50),
at least one cooling air outlet duct (71, 72) situated at an opposite end (51, 52) of the housing (50) in relation to the at least one cooling air inlet duct (61, 62),
a second fan (40) arranged within the housing (50) at a second opposite end (21B) of the shaft (21) protruding from the second end (28B) of the casing (28) in the space between the second end (28b) of the casing (28) and the second end (52) of the housing (50), whereby the second fan (40) is arranged to cause cooling air (L10) to flow from the at least one cooling air inlet duct (61, 62) to the interior of the housing (50) and further along the ventilation channel (55) to the at least one cooling air outlet duct (71, 72) and further to the exterior of the duct (10).

8. Cooling arrangement according to claim 7, **characterized in that** the form of the casing (28) of the electric motor (20) is essentially cylindrical.

9. Cooling arrangement according to claim 7 or 8, **characterized in that** the form of the housing (50) is essentially cylindrical.

10. Cooling arrangement according to any one of claims 7 to 9, **characterized in that** the duct (10) comprises fastening flanges (15, 16) at both ends (11, 12) of the duct (10).
